# EUROPEAN PATENT APPLICATION

(11) **EP 2 924 645 A1**
(43) Date of publication of application: **30.09.2015**
(21) Application number: 12888803.9
(22) Date of filing: 26.11.2012
(51) Int. Cl.: G06Q 50/10

(54) **SENSITIVITY EVALUATION SYSTEM**

(71) Applicant: Hitachi, Ltd., Tokyo 100-8280 (JP)
(72) Inventor: SAGARA Kazuhiko, Tokyo 100-8280 (JP); AKIYAMA Takayuki, Tokyo 100-8280 (JP); HASEGAWA Kiyoshi, Tokyo 100-8280 (JP); MAKI Atsushi, Tokyo 100-8280 (JP)
(74) Representative: MERH-IP Matias Erny Reichl Hoffmann
(86) International application number: PCT/JP2012/080418
(87) International publication number: WO 2014/080509

(57) **Abstract**

Since questionnaires are used according to the sensitivity marketing method in the related art, it is not possible to obtain answers from many people at the same time, and also, analysis of the answers requires a long time, which does not match life cycles of product development. Furthermore, there is a problem that credibility of the aggregate result is low since biomarkers are not used. Thus, in a sensitivity evaluation system for evaluating distributed video information according to the present application, a client system transmits an evaluation request related to the video information to an information analysis system and transmits the video information, which is to be viewed by an examinee, to a receiver or the terminal by which each examinee views the video information, the terminal transmits a biosignal, which is measured by the measurement apparatus that the examinee wears while viewing the video information, to a network, and the information analysis system analyzes the biosignal, creates a report related to the video information based on a result of the analysis, and transmits the created report to the client system.

## Description

### Technical Field

The present invention relates to a sensitivity evaluation system that employs biomarkers.

### Background Art

Currently, the needs of consumers change constantly, and thus it is necessary to quickly reflect the preferences of the consumers and to create content when products are developed. As one of the methods therefor, there is a monitoring system. The monitoring system is based on a scheme for evaluating products by examinees registering as monitors and filling out questionnaires that are sent from organizations that request such experiments. In addition, audience ratings are known as a mechanism for evaluating advertisements and programs. As for the audience ratings, a scheme is employed in which monitor apparatuses are installed in the respective homes and the audience ratings are measured based on operating rates of the apparatuses. Although it is possible to know the percentage of people who watch a specific program in a specific time zone according to this scheme, it is difficult to examine how viewers react to certain scenes while watching the program.

### Citation List

### Patent Literature

PTL 1: JP-A-2012-14614
PTL 2: JP-A-2000-156243

### Summary of Invention

### Technical Problem

In relation to a sensitivity marketing method disclosed in PTL 1, a method of understanding a sensitivity pattern of a target demographic by causing the target demographic to select a plurality of contents in relation to a specific keyword is disclosed. However, according to the scheme, the examinees are required to gather at a laboratory and input answers to questions that are displayed on screens. For this reason, it is not possible to obtain answers from many people at the same time. In addition, analysis of the answers requires a long time, which does not match life cycles of product development. Furthermore, since the answers depend on emotions and subjective evaluations of the examinees according to the questionnaire scheme, credibility of aggregate results is low.

In a multi-channel measurement apparatus disclosed in PTL 2, a scheme of irradiating a test object with light from a plurality of light emitting points and measuring the light, which transmits through the test object, at a plurality of light receiving points is disclosed. However, according to the scheme, the examinee is constrained to being in a laboratory, and it is not possible to measure brain activities in a natural environment. In addition, data that is obtained at the same time includes a lot of overlapping portions, which create a burden on a storage device.

Thus, an object of the present invention is to provide a sensitivity evaluation system that obtains data from many examinees in substantially normal environments at the same time and reports a result of the analysis.

Furthermore, an object of the present invention is to provide a method of causing an examinee to wear a headset at an appropriate wearing position by themselves, measuring physical activities, and employing the biomarkers for a sensitivity evaluation.

### Solution to Problem

Among the inventions disclosed in this application, outlines of representative inventions will be briefly described as follows.

According to a sensitivity evaluation system for evaluating distributed video information, a client system transmits an evaluation request related to the video information to an information analysis system and transmits the video information, which is to be viewed by an examinee, to a receiver or the terminal by which each examinee views the video information, the terminal transmits a biosignal, which is measured by the measurement apparatus that the examinee wears while viewing the video information, to a network, and the information analysis system analyzes the biosignal, creates a report related to the video information based on a result of the analysis, and transmits the created report to the client system.

In addition, the measurement apparatus is provided with a light source that is used for displaying a wearing position of the measurement apparatus to the terminal.

### Advantageous Effects of Invention

According to an embodiment of the present invention, it becomes possible to collect a large amount of sensitivity information in substantially normal environments at the same time by causing the measurement apparatus that the examinee wears to measure brain activity data and transmit a plurality of measurement data pieces to the information analysis system via the network. In addition, it becomes possible for the examinee to wear the measurement apparatus at an appropriate position by using a mobile terminal to adjust the position of the measurement apparatus.

### Brief Description of Drawings

[Fig. 1] Fig. 1 is an overall view of a sensitivity evaluation system according to the present invention.
[Fig. 2] Fig. 2 is a hardware configuration diagram of an information collecting apparatus according to the present invention.
[Fig. 3] Fig. 3 is a hardware configuration diagram of a client system according to the present invention.
[Fig. 4] Fig. 4 is a hardware configuration diagram of an information analysis system according to the present invention.
[Fig. 5] Fig. 5 is a configuration diagram of a bioinstrumentation system according to the present invention.
[Fig. 6] Fig. 6 is a hardware configuration diagram of a mobile terminal according to the present invention.
[Fig. 7] Fig. 7 is a diagram illustrating a flow between apparatuses according to the present invention.
[Fig. 8] Fig. 8 is a configuration diagram of a measurement apparatus according to the present invention.
[Fig. 9] Fig. 9 is a diagram illustrating a flow performed by the mobile terminal according to the present invention.
[Fig. 10] Fig. 10 is a diagram illustrating a flow of the mobile terminal according to the present invention.
[Fig. 11] Fig. 11 is a diagram illustrating a screen of the mobile terminal according to the present invention.
[Fig. 12] Fig. 12 is a diagram illustrating a screen of the mobile terminal according to the present invention.
[Fig. 13] Fig. 13 is a diagram illustrating wearing position calculation processing according to the present invention.
[Fig. 14] Fig. 14 is a diagram illustrating the wearing position calculation processing according to the present invention.
[Fig. 15] Fig. 15 is a diagram illustrating the wearing position calculation processing according to the present invention.
[Fig. 16] Fig. 16 is a diagram illustrating the wearing position calculation processing according to the present invention.
[Fig. 17] Fig. 17 is a diagram illustrating the wearing position calculation processing according to the present invention.
[Fig. 18] Fig. 18 is a diagram illustrating the wearing position calculation processing according to the present invention.
[Fig. 19] Fig. 19 is a diagram illustrating processing performed by an information analysis system according to the present invention.
[Fig. 20] Fig. 20 is a diagram illustrating processing performed by the information analysis system according to the present invention.
[Fig. 21] Fig. 21 is a diagram illustrating processing performed by the information analysis system according to the present invention.
[Fig. 22] Fig. 22 is a diagram illustrating processing performed by the information analysis system according to the present invention.
[Fig. 23] Fig. 23 is a diagram illustrating processing performed by the information analysis system according to the present invention.

### Description of Embodiments

Hereinafter, detailed description will be given of embodiments of the present invention with reference to drawings. In all of the drawings for illustrating the embodiments, the same reference numerals are given to the same members, and repeated descriptions thereof will be omitted.

### (First Embodiment)

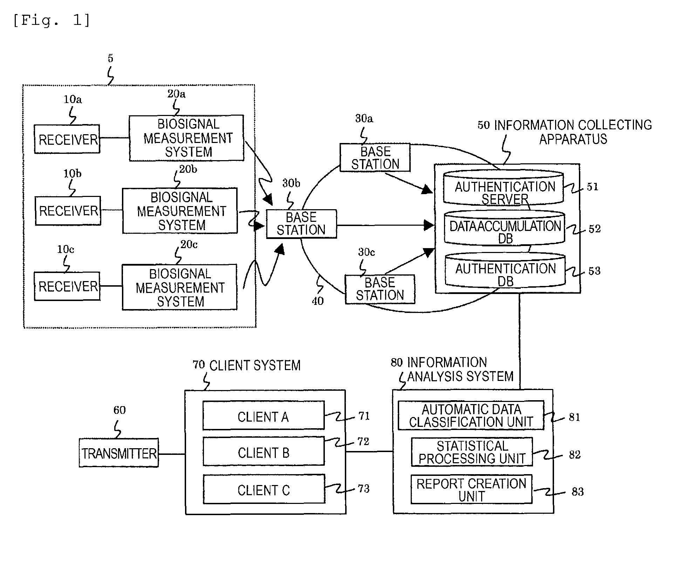

A basic configuration of a sensitivity evaluation system according to the present invention will be shown in Fig. 1. The sensitivity evaluation system is configured of an examinee group 5, receivers 10a to 10c, biosignal measurement systems 20a to 20c, base stations 30a to 30c, a communication network 40, an information collecting apparatus 50, a transmitter 60, a client system 70, and an information analysis system 80. The biosignal measurement system 20 transmits obtained data to the base station 30 in a wireless or wired manner.

The base station 30 encrypts the obtained data and transmits the data to the information collecting apparatus 50. The information collecting apparatus 50 is configured of an authentication server 51, a received data storage database 52, and an authentication database 53, functions of which will be described later.

The information collecting apparatus 50 is connected to an information analysis system 80. The information analysis system 80 is configured of an automatic data classification unit 81 that automatically classifies obtained data, a statistical processing unit 82 that calculates feature amounts from the classified data, and a report creation unit 83 that summarizes statistically analyzed data in a report.

The client system 70 is configured of a plurality of clients A, B, and C, and a portion of the clients distribute created advertisements, programs, and the like to the receivers 10a to 10c via the transmitter 60. Then, examinees who use the biosignal measurement system 20 can view the advertisements, the programs, and the like through the receivers 10a to 10c. Here, the advertisements, the programs, and the like may be distributed to mobile terminals 160, which are owned by the examinees, instead of the receivers 10a to 10c.

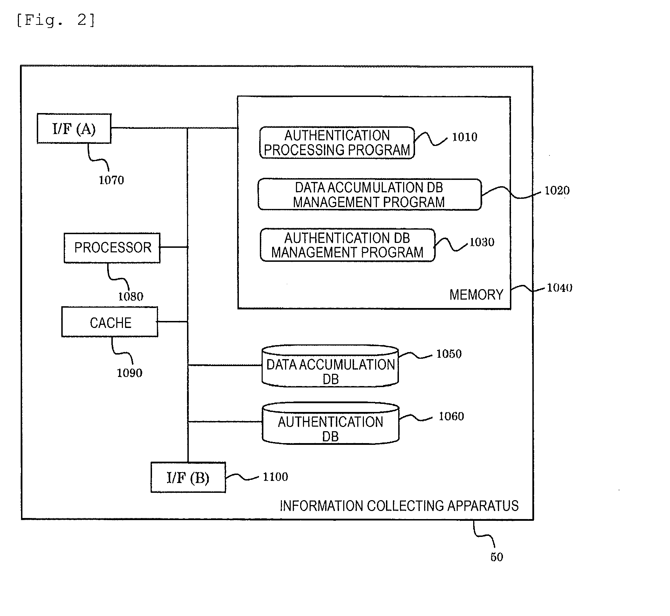

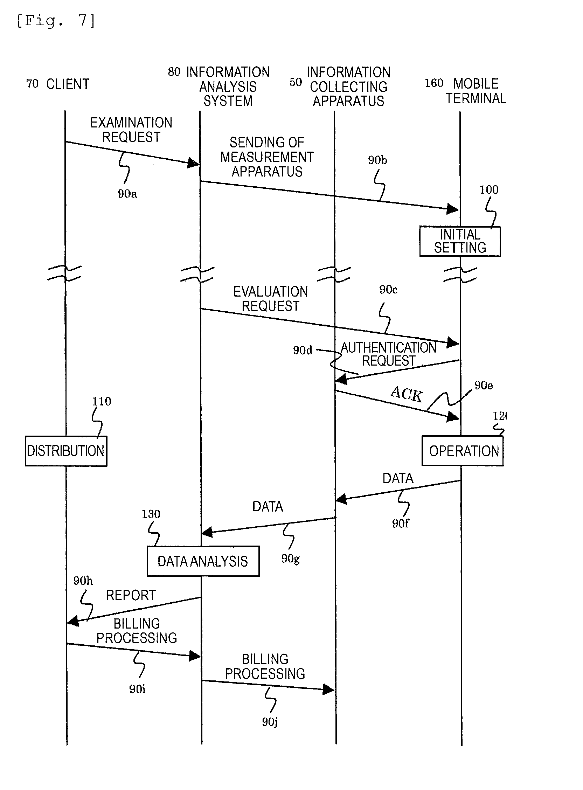

Fig. 2 is a hardware configuration diagram of the information collecting apparatus 50. The information collecting apparatus 50 is configured of an interface 107 that transmits and receives data to and from the base station 30, an interface 1100 that transmits and receives data to and from the information analysis system 80, a processor 1080, a cache 1090, a memory 1040, and databases 1050 and 1060. For example, an authentication processing program 1010 is stored on the memory 1040, and authentication processing illustrated in Fig. 7 is performed by the processor 1080 executing the authentication processing program 1010.

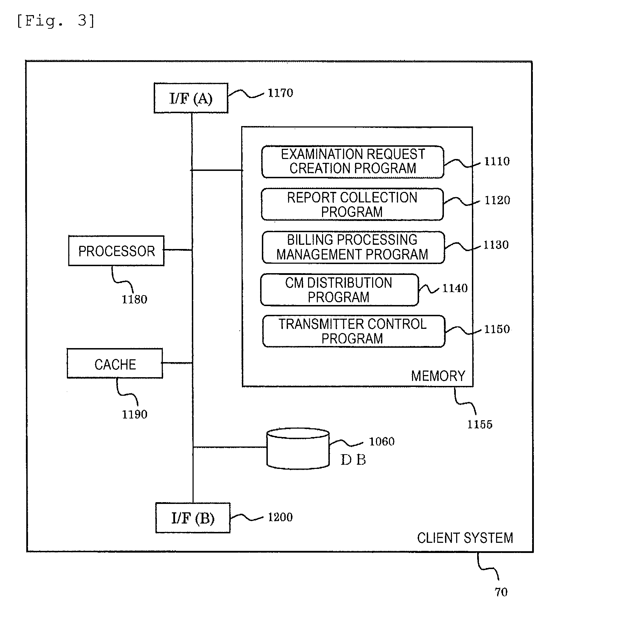

Fig. 3 illustrates a hardware configuration of the client system 70. The client system 70 is configured of an interface 1170 that transmits and receives control signals for the transmitter 60, an interface 1200 that exchanges data with the information collecting apparatus 50, a processor 1180, a cache 1190, a memory 1155, and a database 1160. For example, a report collection program 1140 is stored on the memory 1155, and a process of accumulating reports, which are received from the information analysis system 80, in the database 1160 is performed by the processor 1180 executing the report collection program 1140.

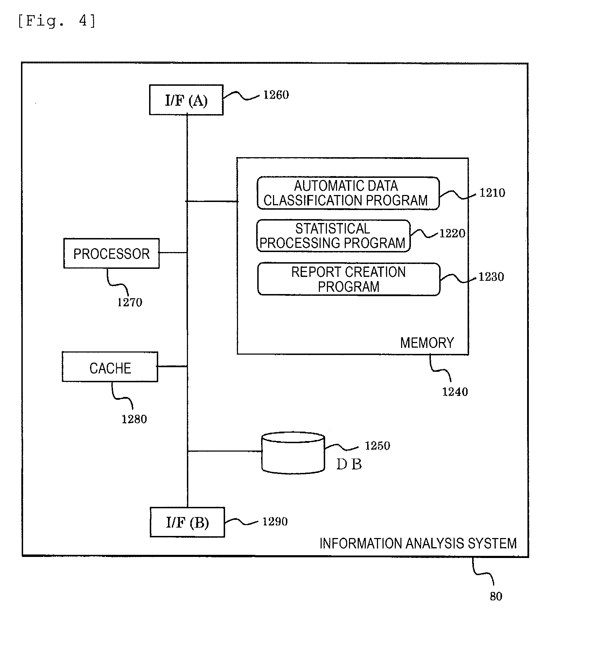

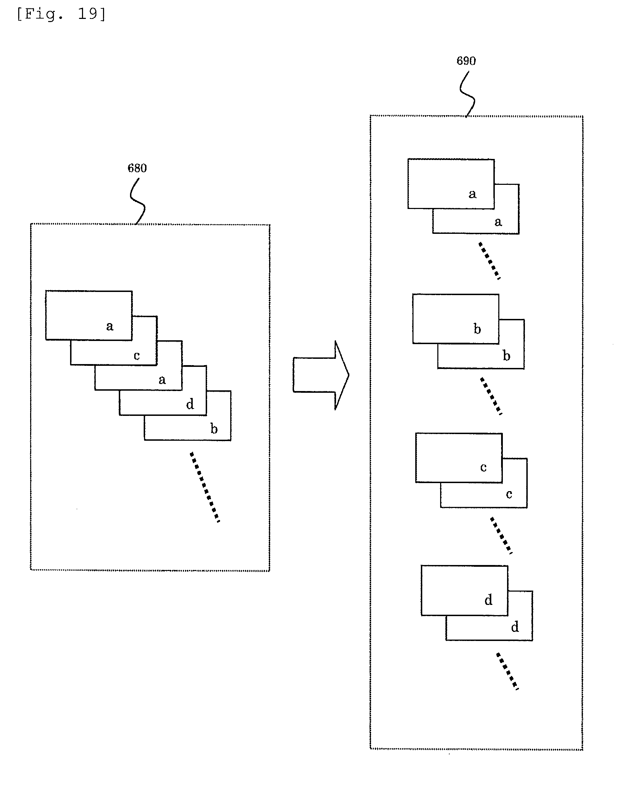

Fig. 4 is a hardware configuration diagram of the information analysis system 80. The information analysis system 80 is configured of an interface 1260 that transmits and receives data to and from the information collecting apparatus 50, an interface 1290 that transmits and receives data to and from the client system 70, a processor 1270, a cache 1280, a memory 1240, and a database 1250. For example, an automatic data classification program 1210 is stored on the memory 1240, and classification processing illustrated in Fig. 19 is performed by the processor 1270 executing the automatic data classification program 1210.

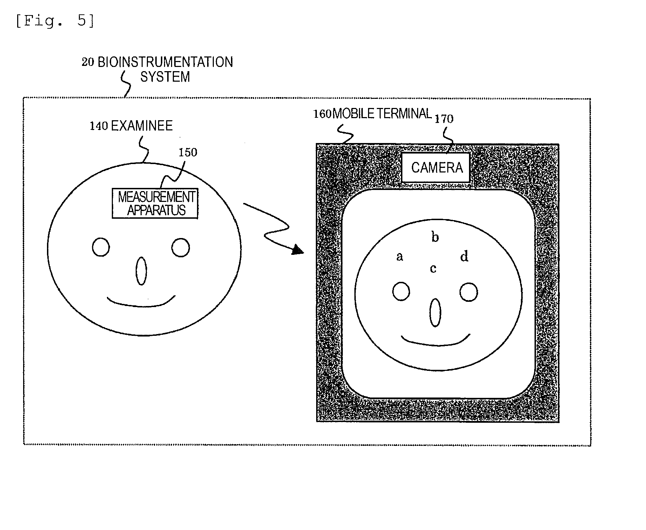

Fig. 5 illustrates a configuration of the bioinstrumentation system 20. The bioinstrumentation system 20 is configured of a measurement apparatus 150 that an examinee 140 wears and a mobile terminal 160 that is used by the examinee 140. Here, the examinee 140 is selected from arbitrary volunteer groups or groups that are registered in the client system 70.

First, the examinee 140 wears the measurement apparatus 150, which is called a headset, on their head. The measurement apparatus 150 measures variations in a cerebral blood volume and variations in neural activities when the examinee 140 views a designated advertisement or program or when a task that excites the five senses is given thereto. In addition, the mobile terminal 160 is provided with a camera 170 and displays the face of the examinee 140 in real time. On the displayed face, marks a, b, c, and d that indicate positions, to which the measurement apparatus 150 is attached, on the head of the examinee 140 are displayed. A method of determining the marks will be described later.

Furthermore, the measurement apparatus 150 transmits the obtained measurement data to the mobile terminal 160 in a wireless manner. The measurement data can be displayed on the mobile terminal 160 or saved therein. The mobile terminal 160 transmits the saved measurement data to the base station 30 during or after the experiment. In addition, the mobile terminal 160 can display information in the advertisement, the program, or the like that is transmitted from the transmitter 60. The examinee 140 evaluates the advertisement, the program, or the like while viewing a screen of the mobile terminal 160.

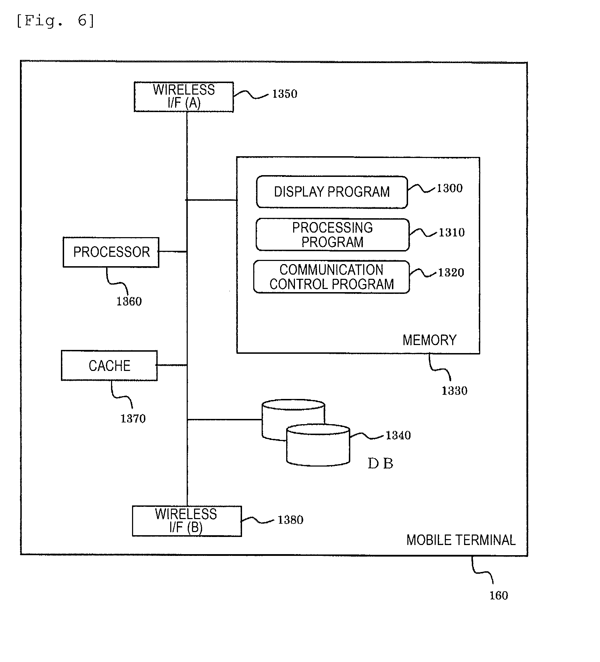

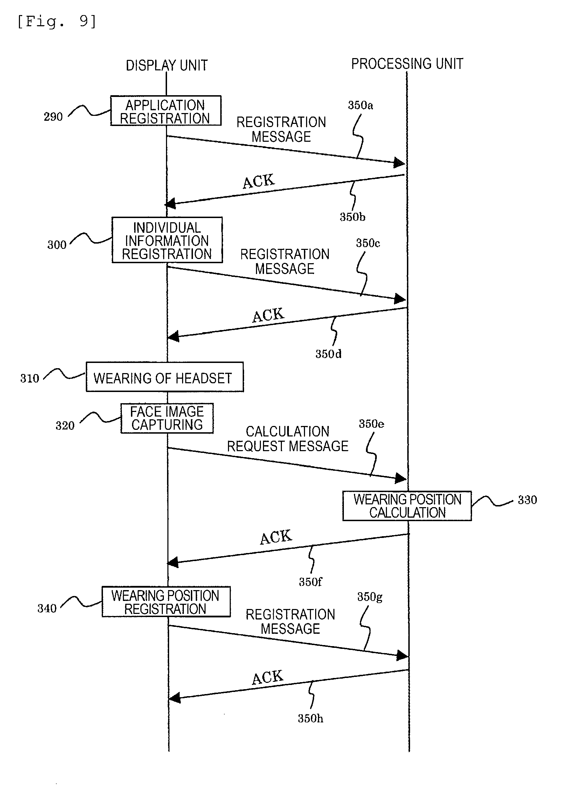

Fig. 6 illustrates a hardware configuration of the mobile terminal 160. The mobile terminal 160 is configured of a wireless interface 1350 that exchanges data with the measurement apparatus 150, a wireless interface 1380 that transmits and receives data to and from the base station 30, a processor 1360, a cache 1370, a memory 1330, and a database 1340 that stores received data. For example, a display program 1300 is stored in the memory 1330, and processing illustrated in Fig. 9 is performed by the processor 1360 executing the display program 1300. As a protocol of the wireless interface 1350, a wireless LAN, WiFi, UWB, or the like that is defined by IEEE is used. As a protocol of the wireless interface 1380, a 3G line, LTE, or the like that is used by a mobile phone company is used. The wireless interface 1350 and the wireless interface 1380 have different frequency bands.

Fig. 7 illustrates a flowchart of the client 70, the information analysis system 80, the information collecting apparatus 50, and the mobile terminal 160.

First, the client 70 transmits an examination request message 90a to the information analysis system 80. The examination request message 90a includes information related to content of the examination, a scale of the examination, the number of examinees, a desired examination end date, desired budget, and the like. Content that it is desirable to evaluate ride quality of a vehicle is one of examples of the content of the examination. In response to the request, the information analysis system 80 lends the measurement apparatus 150 to the examinee who uses the bioinstrumentation system 20 and owns the mobile terminal 160. The information analysis system 80 has a list of candidate participants and automatically performs processing of selecting a participant who matches the content of the examination request message and sends the measurement apparatus to the selected examinee. In addition, the information analysis system 80 can perform statistical analysis for individuals by storing correspondence relationships between participant IDs for identifying the examinees or mobile terminal IDs for specifying the mobile terminals and measurement apparatus IDs. In order to understand which of the video signals is to be distributed to which of the examinees, video information IDs are also associated with each other and stored. Such processing is executed by the processor 1270 of the statistical analysis system 80 illustrated in FIG. 4. Thereafter, the examinee performs initial setting 100 by using the mobile terminal 160. The processing of the initial setting 100 by the mobile terminal 160 will be described later with reference to Fig. 9.

Next, at the time of starting the experiment, the information analysis system 80 sends an evaluation request message 90c to the mobile terminal 160. The evaluation request message 90c includes, for example, program information and the headset wearing positions. For example, the evaluation request message 90c includes a message "The program will start on Channel 1 from 10 am. Please watch the program until 11. At this time, please wear the headset at the position a." The evaluation request message 90c is created by a statistical processing program illustrated in Fig. 4. In addition, the evaluation request message 90c is sent to a participant group to which the measurement apparatuses have been sent. In a case in which there are a plurality of examination requests, participant groups which match the content of the examination and IDs of the mobile terminals are registered in the database 1250. Then, for an examination request A, an evaluation request A is sent to a participant group A. In this example, wearing positions of the measurement apparatus 150 are designated by randomly splitting the participant group 5 into four groups (a, b, c, and d). The mobile terminal 160 receives the evaluation request message and then transmits an authentication request message 90d to the information collecting apparatus 50. The information collecting apparatus 50 executes the authentication processing program that is stored on the memory 1040 illustrated in Fig. 2, determines that the authentication has successfully been made if the terminal ID included in the authentication request message is included in the authentication database 1060, and transmits an authentication result ACK90e to the mobile terminal 160. Thereafter, experiment 120 is started.

During the experiment, the client 70 may perform distribution 110 of an advertisement or a program in some cases. Such an advertisement or a program is distributed to the receiver 10 or the mobile terminal 160.

After completion of the experiment, the mobile terminal 160 transmits measurement data 90f to the information collecting apparatus 50 via the base station 30, and the information collecting apparatus 50 summarizes measurement data, which has been sent from a plurality of base stations 30, as measurement data 90g and transmits the measurement data 90g to the information analysis system 80. The information analysis system 80 performs data analysis 130 and transmits an output report 90h to the client 70.

Finally, the client 70 sends a billing processing message 90i to the information analysis system 80, and then, the information analysis system 80 sends a billing processing message 90j, which includes billing information, to the information collecting apparatus 50. The billing processing message 90i is created by a billing processing management program that is stored on the memory 1155 of the client system 70 in Fig. 3. The billing processing management program creates the billing information that is determined based on the number of examinees, the amount of obtained data, an amount of time a calculator occupies the CPU (at least one of the processor 1270 in the information analysis system and the processor 1080 in the information collecting apparatus). The billing information may include information for providing payment for contribution to the experiment to the examinee. In addition, the billing information may be created by the information analysis system.

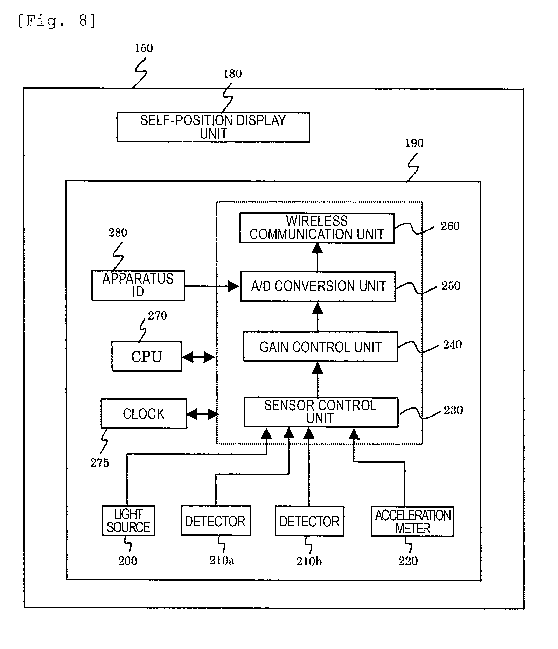

Fig. 8 illustrates a configuration of the measurement apparatus 150. The measurement apparatus 150 is configured of a self-position display unit 180 and a measurement circuit unit 190. The measurement apparatus includes both or one of a near-infrared spectral instrument that irradiates a part of a biological body with light and measures transmitted light and an electroencephalograph that measures electrical signals from a part of a biological body.

The self-position display unit 180 is configured of a light source such as a light-emitting diode and is used for enabling the mobile terminal 170 to recognize the wearing position when the examinee 140 wears the measurement apparatus 150.

The measurement circuit unit 190 is configured of a light source 200 that irradiates the scalp, a detector 210 that detects returning light, an acceleration meter 220, a sensor control unit 230, a gain control unit 240, an A/D conversion unit 250, a wireless communication unit 190, a CPU 270, and a clock 275. The clock 275 controls operation timing of a digital circuit and provides timestamps for the measurement data. In addition, the measurement circuit unit 190 stores an apparatus ID 280 unique to the measurement apparatus, adds the apparatus ID to the measurement data, and transmits the measurement data. In doing so, interference from a plurality of measurement apparatuses 150 is prevented. The information analysis system illustrated in Fig. 4 includes a correspondence table of a wearing position of the measurement apparatus that is designated by the evaluation request, the participant ID, and the apparatus ID, and uses the table to classify and analyze data. In the case of measuring electrical signals accompanying activities of neuron cells of the examinee, a differential amplifier, a filter circuit unit, and the like are connected to the CPU 270.

Fig. 9 illustrates a flow of performing the initial setting when the mobile terminal 160 is used. First, a display unit of the mobile terminal 160 displays a screen for application registration 29a. The examinee 140 presses a button displayed on the display unit. The display unit receives the input and then transmits a registration message 350a to a processing unit. The processing unit completes the registration and then transmits an end message ACK350b to the display unit. Then, the display unit displays a screen for individual information registration 300. The examinee 140 presses a button displayed on the display unit and inputs individual information. The display unit receives the input and then transmits a registration message 350c to the processing unit. The processing unit completes the individual information registration and then transmits an end message ACK350d to the display unit.

Then, the display unit displays a screen for measurement apparatus attachment 310. The examinee 140 wears the measurement apparatus 150 in accordance with instructions on the screen. Subsequently, the display unit displays a screen for face image capturing 320. The examinee 140 directs their face toward the camera 170, images their face, and presses a button on the screen. If the image capturing by the camera is performed, then the display unit transmits a calculation request message 350e, which includes the captured image, to the processing unit. The processing unit executes wearing position calculation 330. Processing of the wearing position calculation 330 will be described in detail in Examples 2 to 4.

If the wearing position calculation 330 is completed, then the positions a, b, c, and d are determined on the screen in Fig. 2, and the processing unit transmits a response confirmation message ACK350f to the display unit. Then, the display unit displays a screen for wearing position registration 340. The examinee 140 checks the positions a, b, c, and d displayed on their face and presses a button. The display unit transmits a registration message 350g to the processing unit. The processing unit completes the registration and then transmits an end message ACK350h to the display unit.

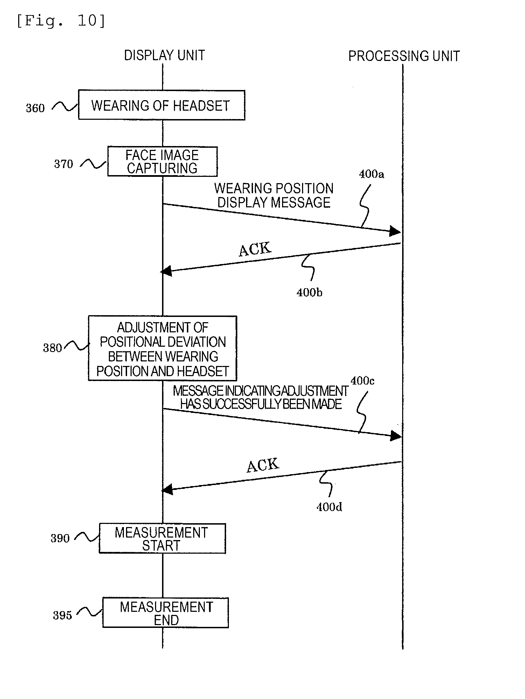

Fig. 10 illustrates a flow during an experiment by using the mobile terminal 160. First, the display unit displays a screen for measurement apparatus attachment 360. The examinee 140 follows instructions given. Then, the display unit displays a screen for face image capturing 370. The examinee 140 directs their face toward the camera 170, captures their face, and presses a button on the screen. The display unit transmits an apparatus position display message 400a to the processing unit, and the processing unit transmits a confirmation message ACK400b to the display unit. The display unit displays the positions a, b, c, and d, which have been registered at the time of the initial setting, on the captured face picture. Then, the display unit displays a screen for positional deviation adjustment 380 between the wearing positions and the measurement apparatus 150. The examinee 140 follows instructions and performs adjustment while viewing the screen of the mobile terminal 160 such that the self-position display unit 180 of the measurement apparatus 150 matches the designated wearing position (a, b, c, or d). The examinee 140 completes the adjustment and then presses a button displayed on the display unit. The display unit transmits a message 400c, which indicates that the adjustment has successfully been made, to the processing unit. The processing unit transmits a response message ACK400d to the display unit. Thereafter, the examinee 140 starts the experiment in accordance with an instruction for measurement start 390. In addition, the examinee 140 presses a measurement completion button 395 when the experiment is completed.

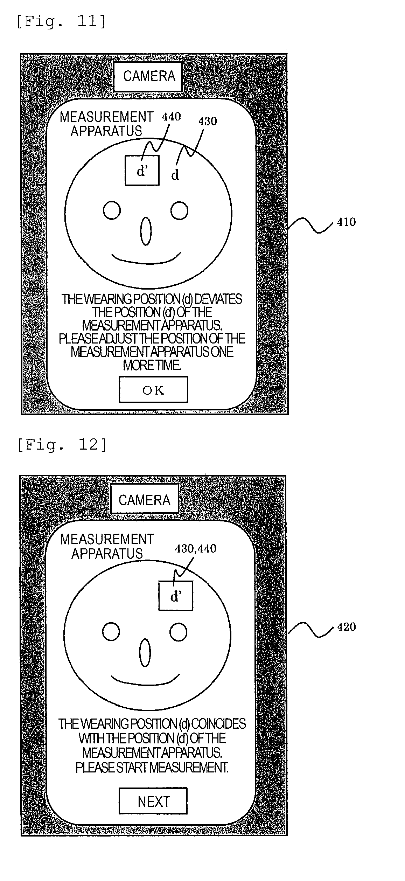

Figs. 11 and 12 illustrates examples of application screens 410 and 420 that are displayed at the time of the positional deviation adjustment 380 between the headset wearing position and the wearing position of the measurement apparatus 150. Fig. 11 illustrates a case in which the wearing position (d) 430 does not coincide with the position (d') 440 of the measurement apparatus 150, namely the position of the self-position display unit 180 of the measurement apparatus 150, and a message that indicates that the positions do not coincide with each other is displayed at a lower portion of the screen. In addition, it is also possible to output an alarm sound while the positions do not coincide with each other.

Fig. 12 illustrates a case in which the wearing position (d) 430 coincides with the position (d') 440 of the measurement apparatus 150, namely the position of the self-position display unit 180 of the measurement apparatus 150, and the positions overlap on the screen. In addition, a message that indicates that the positions successfully coincide with each other is displayed on the lower portion of the screen. It is also possible to output a buzzer sound when the wearing position (d) 430 coincides with the position (d') 440 of the measurement apparatus 150.

### (Second Embodiment)

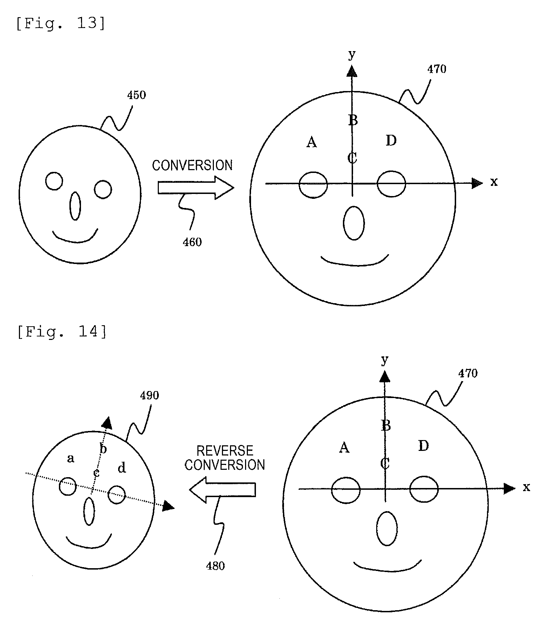

Another embodiment of the present invention will be shown in Figs. 13 and 14. A case according to this embodiment will next be explained in which the processing of the wearing position calculation 330 that is executed by the processing unit of the mobile terminal 160 illustrated in Fig. 9 is performed with reference to eyes.

The captured image 450 in Fig. 13 is an image of the examinee 140, which is captured by the camera 170 of the mobile terminal 160. The processing unit receives the calculation request message 350e, which includes the captured image, from the display unit and then sets an x coordinate in a direction of connecting both the eyes in the captured image and a y coordinate in a direction of a perpendicular bisector of both the eyes. In addition, a standard model 470 is a standard face that is held inside the mobile terminal 160, and a coordinate system of an X axis with reference to both the eyes and a Y axis in a direction toward the top of the head from an intermediate point of both the eyes as an origin. The direction of the Y axis toward the top of the head is determined by an acceleration sensor of the mobile terminal 160. In addition, coordinates of the wearing positions are designated in advance to A(-3, 3), B(0, 5), C(0, 2), and D(3, 3), for example. An application of the mobile terminal 160 performs conversion 4 60 such that the captured image 450 overlaps with the standard model 470. As a conversion algorithm, affine conversion, for example, is applicable. In such a case, six parameters of expansion and contraction, rotation, and translation are used along with the x coordinate and the y coordinate. That is, the captured image 450 is made to coincide with the standard model 470 by overlapping the origins of the captured image 450 and the standard model 470 and rotating and expanding or contracting the captured image 450 by using the six parameters.

Next, the processing unit performs inverse conversion 480 by using the six parameters that are previously obtained, as shown in Fig. 14. That is, calculation is performed to obtain a(-2, 2) from A(-3, 3), b(0, 4) from B(0, 5), c(0, 1) from C(0, 2), and d(2, 2) from D(3, 3). In doing so, it is possible to indicate the wearing positions a, b, c, and d of the measurement apparatus 150 on the captured image 490.

### (Third Embodiment)

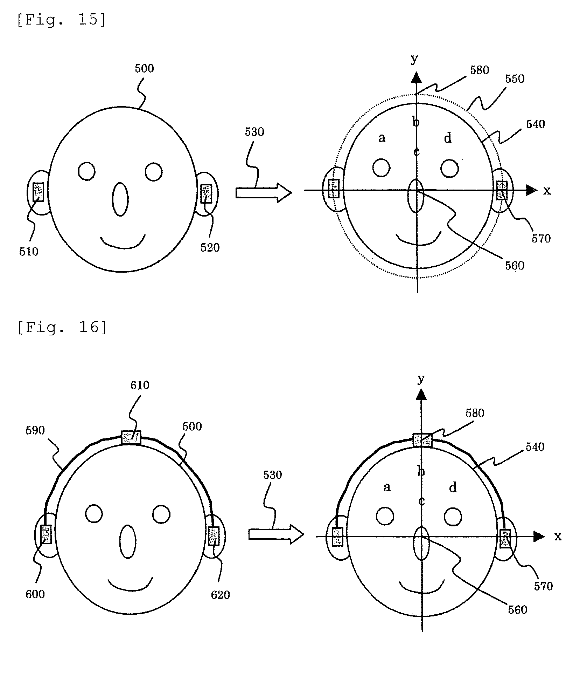

Other embodiments of the present invention will be shown in Figs. 15, 16, and 17. In an embodiment, a case will be described in which the processing of the wearing position calculation 330 that is executed by the processing unit of the mobile terminal 160 illustrated in Fig. 9 is performed with reference to an outline of the face.

Fig. 15 illustrates an example thereof, and first, the examinee 140 wears light sources such as light-emitting diodes 510 and 520 on right and left earlobes. An image 500 captured at this time corresponds to the left diagram in Fig. 15. The processing unit performs overlapping 530 of the coordinate axes. First, the processing unit recognizes the positions of the light-emitting diodes 510 and 520 from the captured image 500, sets an x axis by connecting the positions of the right and left light-emitting diodes 510 and 520, and sets a y axis in a perpendicular direction from the intermediate point between the light-emitting diode 510 and the light-emitting diode 520 as an origin 560. Next, the position of the light-emitting diode 520 is set to a coordinate (p)570. In addition, the coordinate (q)580 in the y-axis direction is obtained by using ellipse approximation 550. That is, calculation is performed so as to satisfy the coordinate (q)580 = the coordinate (p)570 x a coefficient. Here, the range of the coefficient is from 1 to 2, and the coefficient is determined such that the result of the ellipse approximation 550 corresponds to a distance that is exactly equal to an outer periphery of the head in the captured image 540. Since the coordinate (p)570 and the coordinate (q)580 are set here, the coordinates of a, b, c, and d are set to a (-p/3, q/2), b(0, 4q/5), c(0, 2q/5), and d (p/3, q/2), for example.

Fig. 16 illustrates another example, and first, the examinee 140 wears a measurement apparatus 590 which is provided with light sources such as light-emitting diodes 600, 610, and 620 at the positions of right and left ears and the top of the head. An image 500 captured at this time corresponds to the left diagram in Fig. 16. The processing unit performs overlapping 530 of the coordinate axes. First, the processing unit sets the x axis by connecting the positions of the right and left light-emitting diodes 600 and 620 and sets the y axis in a perpendicular direction from the intermediate point between the light-emitting diode 600 and the light-emitting diode 620 as an origin 560. Then, the position of the light-emitting diode 620 is set to the coordinate (p)570. In addition, the position of the light-emitting diode 610 is set to the coordinate (q)580. Since the coordinate (p)570 and the coordinate (q)580 are set here, the coordinates of a, b, c, and d are set to a (-p/3, q/2), b(0, 4q/5), c (0, 2q/5), and d (p/3, q/2), for example. Since the coordinates of a, b, c, and d are set on the captured image 540 as described above, the examinee 140 performs the initial setting and the experiment in accordance with the flows in Figs. 9 and 10.

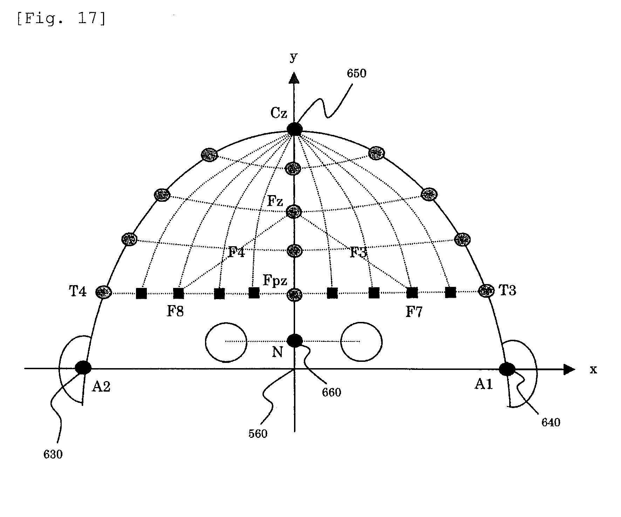

Fig. 17 illustrates a method of determining a position of the headset with reference to the positions of the light-emitting diodes 600, 610, and 620 in Fig. 16. This method is based on the ten-twenty electrode system of the international federation that is employed for brain wave measurement. First, the processing unit sets the position of the light-emitting diode 600 to A2 (-p, 0), the position of the light-emitting diode 620 to A1 (p, 0), and the position of the light-emitting diode 610 to Cz(0, q). In addition, the intermediate point between A1 and A2 to an origin S(0, 0). Furthermore, the center of both the eyes is set to N(0, 1), for example. Next, points that equally split the distance from N to Cz into five sections are calculated, the point corresponding to 1/5 from the side of N is set to Fpz, and the point corresponding to 3/5 is set to Fz. In addition, points that equally split the distance from A1 to Cz along the scalp into five sections are calculated, and the point corresponding to 1/5 from A1 is set to T3. Similarly, the point corresponding to 1/5 from A2 is set to T4. Next, points that equally split the distance from Fpz to T3 into five sections are calculated, and the point corresponding to 2/5 from T3 is set to F7. Similarly, the point corresponding to 2/5 from T4 is set to F8. Thereafter, the intermediate point between Fz and F7 is set to F3, and the intermediate point between Fz and F8 is set to F4. Finally, the coordinates of F4 are set to a, the coordinates of Fz are set to b, the coordinates of Fpz are set to c, and the coordinates of F3 are set to d. Although the intermediate point between Fz and F7 is set to d in the aforementioned example, it is also possible to set the intermediate point between Fz and T3 to d.

### (Fourth Embodiment)

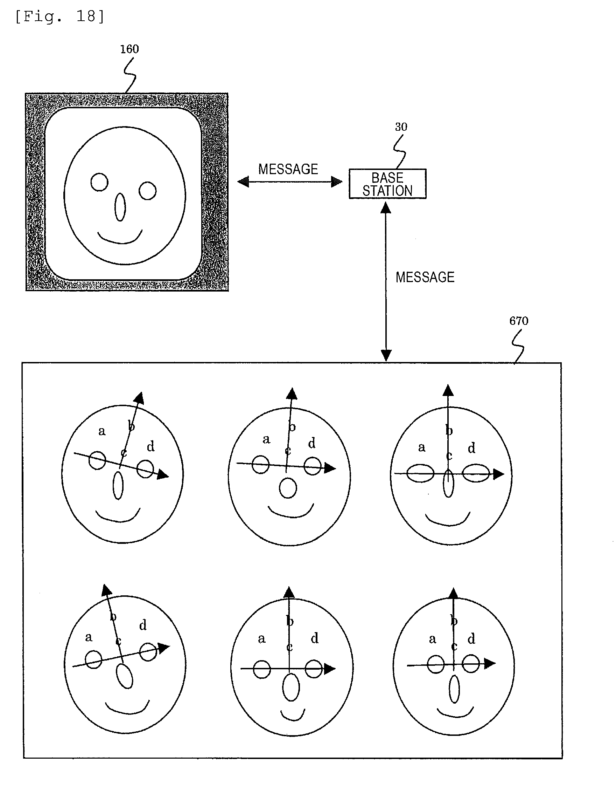

Another embodiment of the present invention will be shown in Fig. 18. In this embodiment, a case will be described in which the processing of the wearing position calculation 330 that is executed by the processing unit illustrated in Fig. 9 is performed by using face recognition. The examinee 140 captures an image of their face by using the camera 170 of the mobile terminal 160, the mobile terminal 160 transmits the captured image to the base station 30, and the base station 30 transmits the captured image to the information collecting apparatus 50 via the communication network 40.

The information collecting apparatus 50 holds a database 670, and many face pictures on which the x coordinate, the y coordinate, and the positions of a, b, c, and d are overlapped are registered in the database 670. The information collecting apparatus 50 calculates similarity from the positions of eyes and noses in the received captured image and the face pictures registered in the database 670, and transmits an image with the highest similarity to the mobile terminal 160. In doing so, it is possible to display the wearing position on the screen of the mobile terminal 160. For the calculation of similarity, a pattern matching method such as template matching or a correlation method is applied.

### (Fifth embodiment)

Another embodiment of the present invention will be shown in Figs. 19, 20, 21, and 22. In this example, details of a process performed by the information analysis system 80 in Fig. 1 will be described.

Fig. 19 illustrates processing by the automatic data classification unit 81. The automatic data classification unit 81 receives a data group 680, which includes measurement data obtained by a plurality of measurement apparatuses 150 during the experiment, from the information collecting apparatus 50. A label that indicates a wearing position (a, b, c, or d) is added to the measurement data, and the measurement data is arranged in an order of acquisition. The automatic data classification unit 81 creates a data group 690 by classifying and grouping the measurement data based on labels as shown in the right section in Fig. 19.

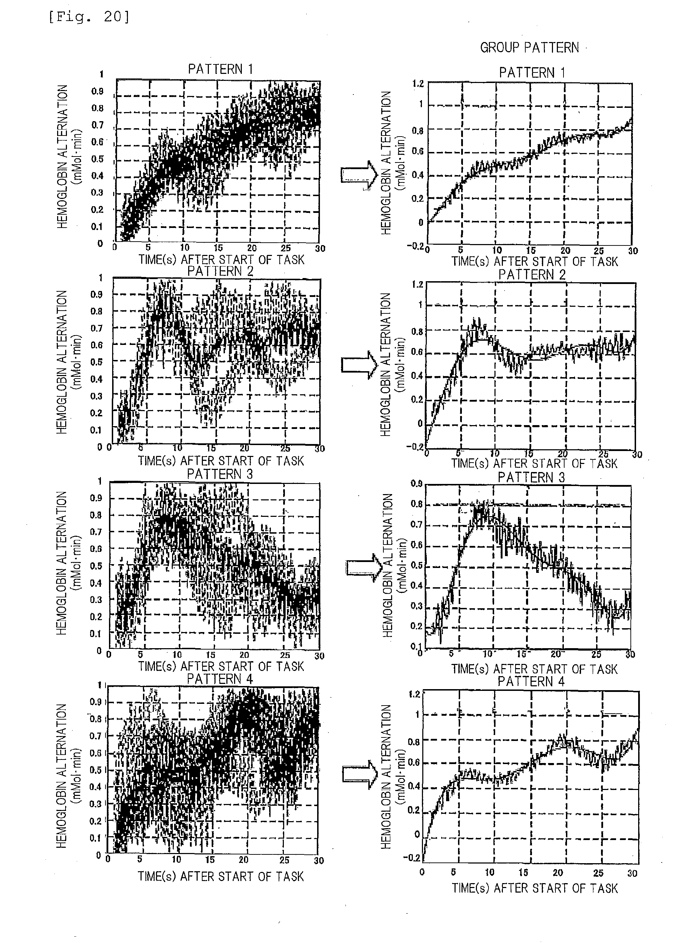

Fig. 20 illustrates processing by the statistical processing unit 82. First, the statistical processing unit 82 creates a graph by overlapping the measurement data, which is acquired by the respective measurement apparatuses 150, at each wearing position (label) as illustrated in the left section in Fig. 20. At this time, an abnormal value is excluded. Then, a moving average of the overlapped measurement data is calculated, and a characteristic group pattern 700 is extracted at each wearing position as illustrated in the right section in Fig. 20. In Fig. 20, graphs correspond to waveforms at the wearing positions a, b, c, and d in an order from the upper side. For example, the right upper diagram in Fig. 20 illustrates a representative waveform at the wearing position a. However, the cerebral blood volume gradually increases after starting to view the advertisement or the program, and it is possible to understand that attention is continuously paid.

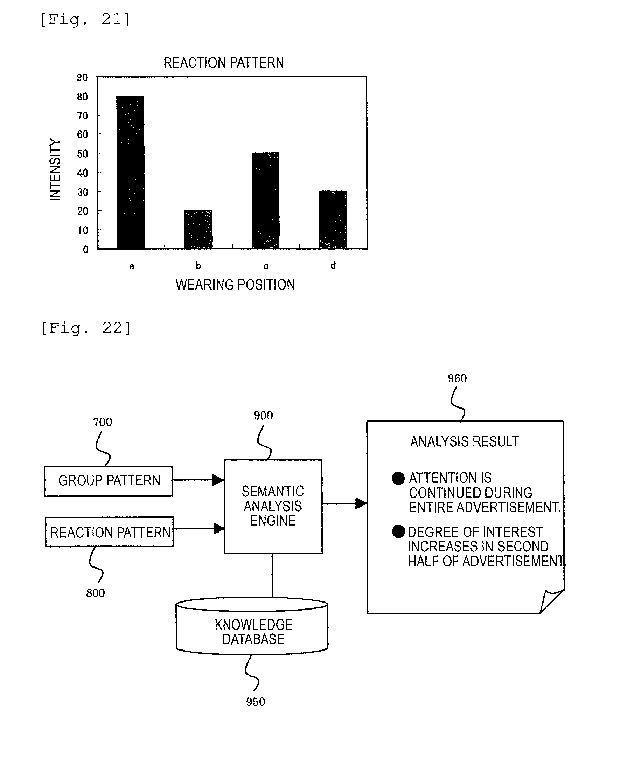

Fig. 21 illustrates other processing by the statistical processing unit 82. In this embodiment, the statistical processing unit 82 calculates intensity at each wearing position from the representative waveforms in the right section in Fig. 20, and a histogram is created. Here, the intensity is calculated from areas of the waveforms, peak values, peak positions, and the like. Since the respective positions correspond to a case in which a reaction occurs with respect to a language or a case in which a reaction occurs with respect to non-language, it is possible to obtain a reaction pattern 800 when an advertisement is viewed. In this example, it is possible to understand that strong reactions occur at the positions a and c as illustrated in the right drawing in Fig. 15.

Fig. 22 illustrates processing by the report creation unit 83. The report creation unit 83 inputs the group pattern 700 and the reaction pattern 800 to a semantic analysis engine 900. The semantic analysis engine 900 refers to a knowledge database 950 that is stored on the DB 1250 and outputs an analysis result 960 at the time of viewing the advertisement or the program from information on the shape of the waveform and responsive parts. In the knowledge database 950, a plurality of group patterns in a case in which the measurement apparatus is placed at the position a, a plurality of group patterns in a case in which the measurement apparatus is placed at the position b, a plurality of group patterns in a case in which the measurement apparatus is placed at the position c, and a plurality of group patterns in a case in which the measurement apparatus is placed at the position d are accumulated. The semantic analysis engine 900 identifies the wearing position of the measurement apparatus from the reaction pattern 800 and calculates similarity by comparison between the group pattern 700 at the wearing position and data on a plurality of group patterns at the identified wearing position from among the group patterns that are accumulated in the knowledge database 950. The similarity is compared by using intensity of reactions or intervals of reactions, for example. Since the reaction at the wearing position a is strong in this example as illustrated in Fig. 21, for example, the report creation unit 83 refers to the knowledge database 950 and calculates similarity between the plurality of group patterns at the wearing position a that is stored on the knowledge database and the measurement data. Since the report creation unit 83 can know, from the calculated similarity, that the group pattern at the wearing position a that is obtained from the measurement data has high similarity with a group pattern in a case in which attention has been gradually continued and a degree of interest has increased, from among the plurality of group patterns at the wearing position a which is stored on the knowledge database, it is considered that when the examinee views the advertisement, the examinee gradually continues attention and the degree of interest increases during the advertisement.

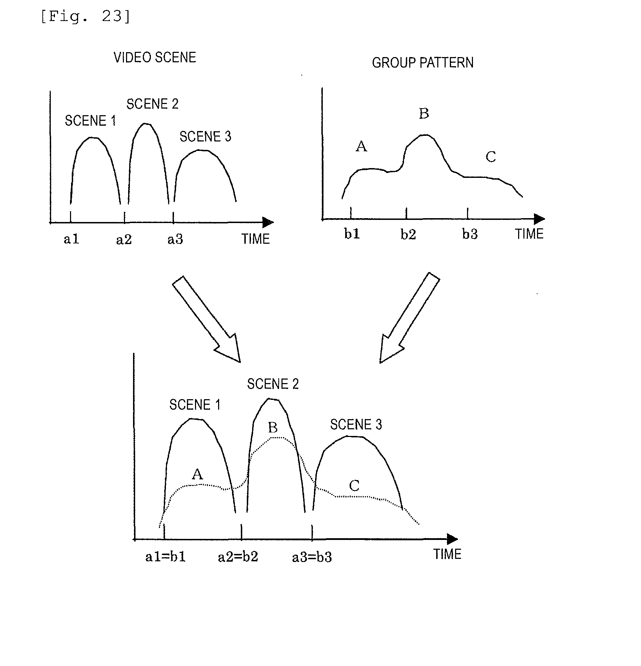

Fig. 23 illustrates an example of processing by the semantic analysis engine 900. A video pattern is configured of scenes 1, 2, and 3, and timestamps a1, a2, and a3 are added thereto, respectively. The timestamps are recorded in the video signal that the transmitter 60 in Fig. 1 transmits to the receiver 10 or the mobile terminal. The information analysis system receives information on the scenes, the timestamps, and the like of the video signal by some method such as a method of receiving the video signal from the transmitter 60 or a method of acquiring information on the video signal from the client system. In addition, the characteristic group pattern 700 (the group pattern obtained by the analysis in Fig. 20) at a specific wearing point, which is obtained by the statistical processing unit 82, is configured of three increasing lines A, B, and C, and timestamps b1, b2, and b3 are added thereto, respectively. The timestamps are added to the measurement data by the clock 275 of the measurement apparatus 150 in Fig. 8.

If time counting of the timestamps a1, a2, and a3 of the image signal differs from time counting of the timestamps b1, b2, and b3 of the group pattern of the measurement data for the examinee who views the video signal, the semantic analysis engine 900 performs scaling of the time axis, forms a time axis so as to satisfy a1 = b1, a2 = b2, and a3 = b3, and creates the synthesized diagram illustrated in the lower section in Fig. 23. It is possible to understand from the synthesized diagram that the signal intensity A, B, and C of the group pattern becomes high so as to correspond to the scenes 1, 2, and 3 and the intensity decreases between the scenes. If the content of the scene 2 of the video signal corresponds to an advertisement in which a specific actress is employed, for example, it is possible to determine that the examinee is highly interested in the scene 2 corresponding to the advertisement in which the specific actress is employed. The report creation unit collects such results of analysis for each advertisement, creates a report of evaluation about what kind of content is to be collected to create an advertisement in order to most effectively cause reactions of viewers, and transmits the report to the client system. Then, the created report is transmitted to the client 70 as illustrated in Figs. 1 and 7, and a series of process for the sensitivity evaluation is completed.

### Reference Signs List

- 5:: examinee group
- 10:: receiver
- 20:: bioinstrumentation system
- 30:: base station
- 40:: communication network
- 50:: information collecting apparatus
- 60:: transmitter
- 51:: server
- 52, 53, 1050, 1060, 1160, 1250, 1340:: database
- 71, 72, 73:: client
- 80:: client system
- 81, 82, 83, 230, 240, 250, 260:: functional block
- 140:: examinee
- 150:: measurement apparatus
- 160:: mobile terminal
- 170:: camera
- 90, 350, 400:: message
- 275:: clock
- 100, 110, 120, 130, 290, 300, 310, 320, 330, 340, 360, 370, 380, 390, 395:: processing block
- 180:: self-position display unit
- 190:: measurement circuit unit
- 200, 210, 220, 270:: device
- 280:: apparatus ID
- 410, 420:: application screen
- 450, 490, 500, 540:: captured image
- 460, 480, 530, 550:: processing
- 470:: standard model
- 560, 570, 580, 630, 640, 650, 660:: coordinate
- 510, 520, 600, 610, 620:: light source
- 590:: headphone
- 670, 950:: database
- 680, 690:: data group
- 700:: group pattern
- 800:: reaction pattern
- 900:: semantic analysis engine
- 960:: report output image
- 1040, 1155, 1240, 1330:: memory
- 1010, 1020, 1030, 1110, 1120, 1130, 1140, 1150, 1210, 1220, 1230, 1300, 1310, 1320:: program
- 1070, 1100, 1170, 1200, 1260, 1290, 1350, 1380:: interface IF
- 1080, 1180, 1270, 1360:: processor
- 1090, 1190, 1280, 1370:: cache

## Claims

1. A sensitivity evaluation system comprising:
a client system;
an information analysis system;
an information collecting apparatus;
a measurement apparatus; and
a terminal,
wherein the client system transmits an evaluation request related to video information to the information analysis system and transmits the video information, which is to be viewed by an examinee, to a receiver or the terminal by which each examinee views the video information,
wherein the terminal transmits a biosignal, which is measured by the measurement apparatus that the examinee wears while viewing the video information, to the information analysis system via the information collecting apparatus, and
wherein the information analysis system analyzes the biosignal, creates a report related to the video information based on a result of the analysis, and transmits the created report to the client system.

2. The sensitivity evaluation system according to Claim 1,
wherein the terminal displays an image of a face of the examinee and a wearing position, at which the measurement apparatus is to be attached, on the face in an overlapped manner.

3. The sensitivity evaluation system according to Claim 2,
wherein the measurement apparatus is provided with a self-position display unit, and
wherein the terminal displays the image of the face of the examinee and the wearing position, at which the measurement apparatus is to be attached, on the face in the overlapped manner, and further displays a position of the self-position display unit.

4. The sensitivity evaluation system according to Claim 3,
wherein the client system transmits billing information to the information analysis system and the information colleting apparatus based on the received result of the analysis.

5. The sensitivity evaluation system according to Claim 4,
wherein the billing information is created based on any one or more of the number of examinees, a size of measurement data, an amount of time the information analysis system occupies a CPU, and an amount of time the information collecting apparatus occupies the CPU.

6. The sensitivity evaluation system according to Claim 3,
wherein the measurement apparatus adds an apparatus identifier of the measurement apparatus to the biosignal and transmits the biosignal to the terminal.

7. The sensitivity evaluation system according to Claim 3,
wherein the measurement apparatus includes a near-infrared spectral instrument that irradiates a part of biological body with light and measures transmitted light or an electroencephalograph that measures an electrical signals from a part of the biological body.

8. The sensitivity evaluation system according to Claim 3,
wherein the terminal calculates conversion parameters by converting a captured image of the examinee so as to coincide with a standard model and uses the calculated conversion parameters to display coordinates of the wearing position on the captured image.

9. The sensitivity evaluation system according to Claim 3,
wherein the terminal sets x and y coordinate axes based on a position of a light source that is attached to the examinee displayed on the captured image, and determines coordinates of the wearing position based on the coordinate axes.

10. The sensitivity evaluation system according to Claim 3,
wherein the information analysis system is provided with a database that holds a plurality of face images with coordinates, and
wherein the terminal transmits the captured image of the examinee to the database and determines the coordinate of the wearing position of the measurement apparatus based on a face image with the highest similarity from among the plurality of face images with coordinates that are stored on the database.

11. The sensitivity evaluation system according to Claim 1,
wherein the information analysis system classifies measurement data obtained by a plurality of measurement apparatuses depending on each wearing position label, calculates a measured waveform data pattern for each classified wearing position label, calculates an intensity pattern for each wearing position label based on the measured waveform data pattern, and extracts the result of the analysis based on the measured waveform data pattern and the intensity pattern.

12. The sensitivity evaluation system according to Claim 11,
wherein timestamps are added to the video signal,
wherein the measurement apparatus adds timestamps to the measurement data, and
wherein the information analysis system adjusts a time axis between the timestamps, namely between the plurality of timestamps that are added to the video signal and the plurality of the timestamps that are added to the measurement data and obtains the result of the analysis based on a result of the adjustment.

13. The sensitivity evaluation system according to Claim 12,
wherein the analysis system holds a plurality of group patterns of biosignals for each wearing positions of the measurement apparatus, compares similarity between the plurality of group patterns and the measured waveform data pattern, and calculates the result of the analysis.

14. The sensitivity evaluation system according to Claim 13,
wherein the measurement apparatus is further provided with a plurality of sensors, a control circuit, a CPU, a light source, and a wireless communication unit, and
wherein the self-position display unit is a light source that is for displaying the wearing position of the measurement apparatus to the terminal.

15. A measurement apparatus that measures a biosignal of an examinee who views a video signal, the apparatus comprising:
a plurality of sensors;
a control circuit;
a CPU;
a light source;
a wireless communication unit; and
a self-position display unit,
wherein the self-position display unit is a light source that is for displaying a wearing position of the measurement apparatus to a terminal that the examinee holds.

16. A sensitivity evaluation method for evaluating distributed video information, the method comprising:
causing a client system to transmit an evaluation request related to video information to an information analysis system and transmit the video information, which is to be viewed by an examinee, to a receiver or a terminal by which each examinee views the video information;
causing the terminal to transmit a biosignal, which is measured by a measurement apparatus that the examinee wears while viewing the video information, to the information analysis system via an information collecting apparatus; and
causing the information analysis system to analyze the biosignal, create a report related to the video information based on a result of the analysis, and transmit the created report to the client system.

17. The sensitivity evaluation method according to Claim 16,
wherein the client system transmits billing information to the information analysis system and the information colleting apparatus based on the received result of the analysis.
